# DEMANDE DE BREVET EUROPEEN

(11) **EP 0 546 882 A1**
(43) Date de publication de la demande: **16.06.1993**
(21) Numéro de dépôt: 92403203.0
(22) Date de dépôt: 27.11.1992
(51) Int. Cl.: G06F 9/44, H04L 12/24, G06F 11/22

(54) **Système expert supportant les contraintes du temps réel**

(30) Priorité: 29.11.1991 FR 9114859
(71) Demandeur: ALCATEL CIT, F-75008 Paris (FR)
(72) Inventeur: Alston, Andrew, F-92340 Bourg-La-Reine (FR); Delory, Jean-Michel, F-78320 Levis St. Nom (FR); Gandara, Marc, F-75015 Paris (FR); Laasri, Hassan, F-91290 Arpajon (FR)
(74) Mandataire: Sciaux, Edmond

(57) **Abrégé**

Il comporte :
- un premier module (21) dit de filtrage, définissant en temps réel des évènements significatifs, révélateurs de problèmes, à partir de messages d entrée;
- une base de données (22) mémorisant : tous les messages d'entrée, les évènements significatifs définis par le premier module, des données dites intermédiaires produites par le système expert, et des données constituant un modèle du réseau de machines;
- un deuxième module (23), dit de raisonnement comprenant :
   -- un ensemble de règles divisé en plusieurs sous-ensembles appellés spécialistes; chacun permettant de traiter une partie d'un problème et pouvant être exécuté en parallèle avec d'autres sans interblocage;
   -- des moyens de commande pour exécuter des spécialistes en fonction de règles heuristiques, et pour prendre une décision ou déclarer une impossibilité de décision, à la fin d'un délai prédéterminé;
- un troisième module (24), dit de présentation de bilan, pour fournir à un expert humain des données intermédiaires l'aidant à faire une analyse plus fine que celle faite par le système expert.

Application à la maintenance et/ou à la gestion d'un réseau de télécommunications.

## Description

L'invention concerne un système expert supportant les contraintes du temps réel, pour prendre des décisions à partir d'un flux de messages d'entrée concernant le fonctionnement et les états d'un réseau de machines, ces états évoluant au cours du temps. Ces décisions peuvent être appliquées automatiquement par le réseau de machines, ou bien peuvent être une aide à la décision d'un expert humain. Ces deux applications sont complémentaires lorsque le système expert rencontre des problèmes qu'ils ne parvient pas à résoudre. Les décisions doivent alors être prises par un expert humain, mais un système expert peut lui apporter une aide efficace en faisant une analyse préliminaire des problèmes.

L'invention concerne notamment le domaine de la gestion des réseaux de télécommunications et le domaine de la maintenance des réseaux de télécommunications. Dans le domaine de la gestion des réseaux de télécommunications, les logiciels utilisés actuellement ne font que visualiser le comportement du réseau, en affichant le résultat de comptages traduisant respectivement la charge de chaque liaison, et en visualisant des alarmes. Les décisions de gestion et les actions résultantes sont élaborés par un expert humain.

Dans le domaine de la maintenance des réseaux de télécommunications, il est connu d'utiliser un réseau de maintenance pour centraliser des informations de maintenance produites par des logiciels de maintenance locale. Ces derniers sont exécutés localement dans chacun des centres de commutation. Il y a des logiciels de détection de fautes, des logiciels de test périodique, et des logiciels de localisation de panne. Ces derniers sont lancés, soit automatiquement soit par un opérateur, lorsqu'une faute est détectée.

Des moyens de test indépendants testent les liaisons reliant deux centres de commutation.

Un logiciel de maintenance locale permet de localiser la majorité des pannes matérielles franches. Cependant ces logiciels sont peu performants pour les pannes intermitentes ou qui découlent d'une dégradation lente du matériel. Ils ne permettent donc pas une maintenance préventive. Les concepteurs de ces logiciels ne peuvent pas prévoir absolument toutes les pannes possibles. Une partie des connaissances nécessaires pour localiser les pannes difficiles ne peut être acquise que par l'expérience.

Les systèmes experts classiques résolvent un problème à partir d'un lot de données qui est figé, en prenant un temps de calcul aussi long que nécessaire, voire non borné. Dans le domaine de la gestion ou de la maintenance d'un réseau de télécommunications, il est indispensable que le système expert puisse prendre des décisions à partir de données qui évoluent pendant la durée même de la prise de décision. Un système expert classique ne peut pas prendre en compte cette évolution en temps réel. Un expert humain doit prendre des décisions à la place du système expert, dans les cas où ce dernier n'a pas réussi à prendre une décision, mais l'expert humain risque d'être submergé par un flot de données plus ou moins significatives provenant du réseau.

Le but de l'invention est de proposer un système expert capable de résoudre en temps réel des problèmes de gestion ou des problèmes de maintenance, d'un réseau de télécommunications; et capable d'aider un expert humain dans la résolution des problèmes résiduels n'ayant pas pu être résolus par le système expert. Ce but doit être atteint sans avoir à modifier les logiciels déjà implantés dans les centres de commutation.

L'objet de l'invention est un système expert supportant les contraintes du temps réel, pour résoudre un problème à partir d'un flux de messages d'entrée concernant le fonctionnement et les états d'un réseau de machines, ces états évoluant au cours du temps; caractérisé en ce qu'il comporte :
- un premier module dit de filtrage, détectant en temps réel des évènements dits significatifs, à partir des messages d'entrée, chaque évènement significatif étant une manifestation d'un problème, d'après les connaissances d'un expert humain;
- une base de données mémorisant : tous les messages d'entrée, les évènements significatifs définis par le premier module, des données dites intermédiaires produites par le système expert, des données constituant un modèle du réseau de machines, et des archives relatives à des problèmes traités antérieurement, résolus ou non;
- un deuxième module, dit de raisonnement, comprenant :
   -- un ensemble de règles divisé en plusieurs sous-ensembles appellés spécialistes, chacun étant constitué de connaissances fournies par un expert humain, nécessaires pour traiter une partie d'un problème, chaque spécialiste pouvant être exécuté en parallèle avec d'autres sans inter-blocage;
   -- des moyens de commande pour sélectionner et exécuter des spécialistes en fonction de règles heuristiques fournies par un expert humains, et pour prendre une décision ou déclarer une impossibilité de décision, à la fin d'un délai prédéterminé, sur au moins un problème traduit par des évènements significatifs que le module de filtrage communique au module de raisonnement;
- une interface graphique pour la communication entre le système expert et des hommes;
- un troisième module dit de présentation de bilan pour fournir à un expert humain des données mémorisées dans la base de données.

Le système expert ainsi caractérisé supporte les contraintes du temps réel pour deux raisons :
- le filtrage des évènements significatifs est séparé du raisonnement. Le raisonnement, qui consomme beaucoup de temps, ne porte pas sur l'ensemble du flot de messages d'entrée. Le filtrage, qui peut être fait par un procédé simple et rapide, porte sur tous les messages d'entrée. Le module de filtrage réduit fortement le nombre des évènements à prendre en compte, en discriminant en temps réel les messages d'entrée qui correspondent à un évènement significatif et les messages d'entrée qui ne correspondent à aucun évènement significatif, compte-tenu de connaissances fournies par les experts humains.
- La parallélisation des raisonnements sur des sous-problèmes différents, au moyen des spécialistes exécutables sans inter-blocage, pour traiter plusieurs problèmes différents en parallèle. Les moyens de commande recueillent, au bout d'un délai prédéterminé, les résultats du raisonnement de chaque spécialiste, s'il y a des résultats. Ils fournissent donc une décision, ou une déclaration d'impossibilité de décision au bout d'un délai fini, même si un ou plusieurs spécialiste est susceptible de continuer son traitement pendant très longtemps.

Des modes de réalisations particuliers sont mentionnés dans les revendications 2, 3, et 4.

L'invention sera mieux comprise et d'autres détails apparaîtront à l'aide de la description ci-dessous d'un exemple de réalisation concernant la maintenance d'un réseau de télécommunications, et des figures l'accompagnant :
- la figure 1 représente schématiquement l'architecture de cet exemple de réalisation du système expert selon l'invention;
- la figure 2 représente schématiquement l'architecture du module de filtrage de cet exemple de réalisation;
- la figure 3 représente schématiquement l'architecture du module de raisonnement de cet exemple de réalisation;
- la figure 4 représente la structure matérielle d'un centre de commutation, sous la forme d'un arbre, ce modèle permettant de propager une analyse de problème de recherche de panne, jusqu'à trouver l'élément qui est défectueux;
- la figure 5 représente schématiquement les liens logiques établis par le système expert, entre les informations utilisées pour résoudre un problème donné, parmi différents problèmes se présentant simultanément ou quasi simultanément dans ce réseau de télécommunications.

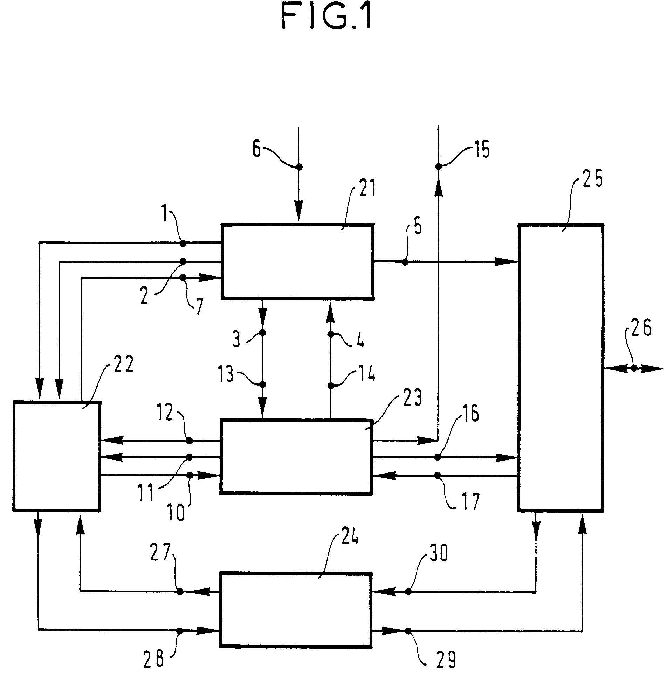

La figure 1 représente schématiquement l'architecture d'un exemple de réalisation du système expert selon l'invention, appliqué à la maintenance d'un réseau de télécommunications. Il est implanté dans la machine constituant l'un des noeuds d'un réseau de maintenance classique, associé à ce réseau de télécommunications. Cet exemple de réalisation comporte :
- un module logiciel 21 appellé module de filtrage;
- une base de données 22, préférentiellement du type "orientée objets";
- un module logiciel 23 appellé module de raisonnement;
- un module logiciel 24 appelé module de présentation de bilan;
- et une interface graphique 25.

Le module de filtrage 21 possède une entrée 6 reliée au réseau de télécommunications pour recevoir un flot de messages d'entrée qui sont des messages de maintenance représentant généralement des fautes détectées les centres de commutation du réseau de télécommunications. Le module 21 possède une sortie 1 reliée à une entrée de la base de données 22 pour inscrire dans cette dernière : d'une part, tous les messages d'entrée, après un formatage convenable; et d'autre part, des données élaborées par le module 21 et appellés évènements significatifs. Chaque évènement significatif est la manifestation d'un problème, au moins potentiel. En l'occurence, un problème est une panne franche; un problème potentiel est une panne intermittente ou une dégradation des performances du réseau, qui annonce probablement une panne franche. Dans ce dernier cas, une réparation préventive permet d'éviter une panne franche plus tard.

Une autre sortie 2 du module 21 est reliée à la base de données 22 pour y inscrire des étiquettes associées respectivement à chacun des évènements significatifs et désignant un problème. Une sortie 3 du module 21 est reliée à une entrée du module de raisonnement 23 pour lui fournir les évènements significatifs. Une sortie 5 du module 21, est reliée à une entrée de l'interface graphique 25 pour lui fournir les évènements significatifs et les étiquettes de problème, au fur et à mesure de leurs créations. Une entrée 4 du module 21 reçoit des commandes fournies par une sortie du module de raisonnement 23. Une entrée 7 du module 21 est reliée à une sortie de la base de données 22.

Dans le flot de messages de maintenance arrivant à l'entrée 6 du module de filtrage 21, certains messages peuvent et doivent être traités immédiatement alors que d'autres ne sont pas significatifs s'ils sont considérés isolément. Il n'est donc pas possible de définir à priori le degré d'importance pour chaque type de message de maintenance, car cette importance dépend du contexte constitué par les autres messages arrivant simultanément ou dans un intervalle de temps voisin. Il n'est pas possible, non plus, de prévoir, au moment de la conception du système expert, les différentes combinaisons de messages qui arriveront à l'entrée 6 du module 21. Par contre, un expert humain sait interpréter le nombre d'apparitions de tel ou tel message pendant un intervalle de temps d'une certaine durée. Il peut dire que n apparitions, ou plus, du message de type X est un évènement significatif appartenant au contexte d'un problème P et que cet évènement peut contribuer à identifier et résoudre ce problème.

Ces connaissances d'un expert humain sont appliquées par le module 21 pour filtrer les messages de maintenance. Le procédé utilisé de préférence consiste en un comptage de tous les messages de maintenance ayant un type donné ou plusieurs types données, qui sont arrivés au module 21 pendant un intervalle glissant ayant une durée fixée; et à comparer le résultat du comptage avec une valeur de seuil prédéterminée par l'expert humain, comme constituant un évènement significatif, d'après son expérience et ses connaissances théoriques. Cette technique de filtrage des évènements significatifs est applicable en temps réel car elle est particulièrement simple. D'autres techniques simples appliquant les connaissances d'un expert humain pourraient être utilisées, en plus du comptage.

Le module 21 ne réalise pas de corrélation entre les évènements, pour éviter d'augmenter la durée du temps de traitement au niveau du module 21. Les corrélations sont réalisées par le module de raisonnement 23, ou une durée de traitement plus longue est acceptable. Par contre, le module 21 crée des liens entre des évènements significatifs potentiellement liés à un même problème.

Il associe à chaque évènement significatif une étiquette qui est différente pour chaque problème potentiel nouveau, c'est-à-dire chaque fois que la valeur de seuil est dépassée pour l'un des comptages réalisés. Mais le module de raisonnement 23 peut modifier les étiquettes et associer une même étiquette à des messages de types différents, qui sont liés à un même problème d'après les connaissances de l'expert humain, mémorisées dans le module de de raisonnement 23.

Le module de raisonnement 23 comporte : une entrée 10 et deux sorties 11, 12 reliées respectivement à une sortie et à deux entrées de la base de données 22; une entrée 13 et une sortie 14 reliées respectivement à la sortie 3 et à l'entrée du module filtrage 21; une sortie 15 reliée au réseau de maintenance du réseau de télécommunications; une sortie 16 reliée à une entrée de l'interface graphique 25; et une entrée 17 reliée à une sortie de l'interface graphique 25.

Le module 23 cherche à corréler chaque évènement significatif avec un problème déjà en cours d'analyse. D'autre part, il cherche à propager un raisonnement de résolution de chaque problème, dans un modèle du réseau de télécommunications, en forme d'arbre, qui est mémorisé dans la base de données 22. Il comporte un ensemble de règles fournies par des experts humains. Cet ensemble est divisé en sous-ensembles appelés spécialistes. Chacun peut résoudre un problème ou un sous-problème, c'est-à-dire une partie d'un problème. La répartition des règles dans les différents spécialistes est indépendante de l'architecture matérielle des centre de commutation, qui est modélisée dans la base de données 22. Ces spécialistes sont activés en fonction du type des évènements significatifs reçus sur l'entrée 13. Si l'un des spécialistes arrive à formuler un diagnostic et propose une réparation, cette proposition est transmise par la sortie 16 à l'interface graphique 25 en vue de la présenter à un expert humain ou au personnel de réparation. Si le personnel de réparation exécute une réparation, celle-ci est supervisée par le module de filtrage 21 et le module de raisonnement 23, ce dernier pouvant modifier les paramètres de filtrage du module 21, en lui fournissant par exemple de nouvelles valeurs de seuil par l'intermédiaire de la sortie 14 reliée à l'entrée 4 du module 21, pour détecter d'autres évènement significatifs. Le diagnostic et la réparation peuvent donc comprendre plusieurs phases successives utilisant un filtrage différent dans le module 21.

La fonction essentielle du module de présentation du bilan 24 est de faciliter l'accès d'un expert humain à toutes les données considérées comme pertinentes. Le module 24 peut être utilisé pour :
- connaître l'état global du réseau, c'est-à-dire les problèmes qui ont été détectés et résolus, par le système expert ainsi que les problèmes qui ont été détectés mais qui n'ont pas été résolus par le système expert;
- suivre les conséquences d'actions de maintenance réalisées dans le passé.

L'expert humain est capable de faire une analyse plus fine et plus étendue que celle du système expert, en corrélant divers problèmes détectés précédemment et diverses actions de réparation commandées précédemment par le système expert. Diverses pannes répétées peuvent cacher en fait une panne plus subtile située dans une partie du réseau n'ayant pas encore été mise en cause. Le système expert possède la connaissance de la plupart des problèmes de maintenance qui peuvent se présenter et il peut généralement suggérer des actions de réparation. Cependant, dans certains cas, ces connaissances sont insuffisantes pour décider d'une action de réparation, ou bien même sont insuffisantes pour détecter l'existence d'un problème. Dans tous ces cas, la présentation de bilans réalisés par le module 24 aide l'expert, en dégageant des événements significatifs et des résultats intermédiaires, beaucoup plus faciles à interpréter que le flot de messages arrivant directement du réseau de maintenance. Naturellement, l'intervention de l'expert humain consiste en outre à enrichir les connaissances du système expert en lui fournissant un module spécialiste supplémentaire, et des règles heuristiques de commande supplémentaires, chaque fois que l'expert humain résoud un problème que le système expert ne savait pas résoudre.

Le module 24 de présentation de bilan comporte : une sortie 27 et une entrée 28 reliées respectivement à une entrée et à une sortie de la base de données 22; une sortie 29 et une entrée 30 reliées respectivement à une entrée et à une sortie de l'interface graphique 25. Le module 24 prélève dans la base de données 22 des données choisies pour constituer un bilan. Ces données sont choisies à l'avance par des experts humains, comme étant particulièrement intéressantes. Ce bilan est transmis à l'interface 25, à la demande d'un expert humain. Le module 25 peut être constitué d'un système classique de gestion de base de données, orienté objets.

L'interface graphique 25 comporte une entrée-sortie 26 reliée à des terminaux informatiques à la disposition d'experts humains, et de membres du personnel de réparation.

Considérons maintenons de manière plus détaillée :
- le module de filtrage 21;
- le module de raisonnement 23;
- la base de données 22.

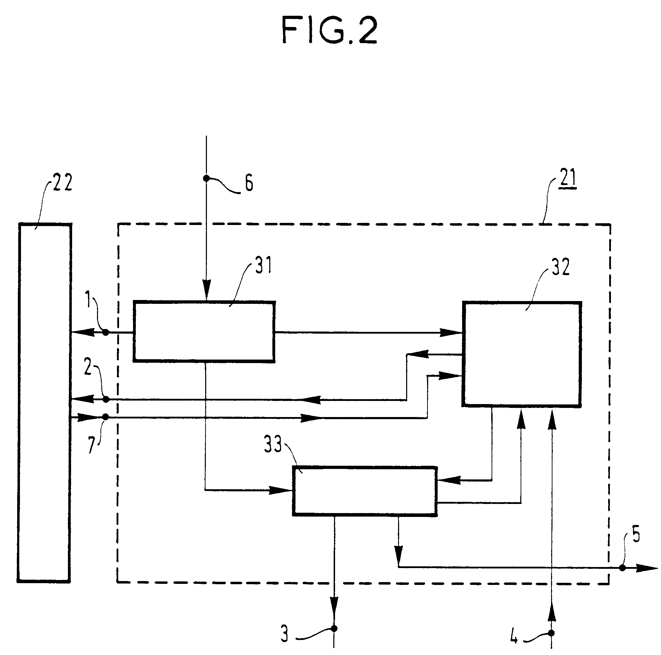

La figure 2 représente schématiquement l'architecture du module 21 de filtrage. Il comporte : un sous-module logiciel 31 d'acquisition et de formatage des messages de maintenance; un sous-module logiciel 32 de gestion de comptage de messages; et un sous-module logiciel 33 générateur d'évènements significatifs et d'étiquettes associées à ces évènements.

Le sous-module 31 possède une entrée reliée à l'entrée 6 du module 21 pour recevoir les messages de maintenance; une première sortie reliée à la sortie 1 du module 21 pour inscrire dans la base de données 22 les messages de maintenance; une seconde sortie reliée à une entrée du sous-module 33 pour lui fournir des messages de maintenance formatés; et une troisième sortie reliée à une entrée du sous-module 32 pour lui indiquer le type de chaque message reçu. Le sous-module 32 possède : une entrée reliée à l'entrée 7 du module 21, pour recevoir des données lues dans la base de données 22; une entrée reliée à l'entrée 4 du module 21 pour recevoir des commandes fournies par le module de raisonnement 23; une entrée reliée à une sortie du sous-module 33 pour recevoir les étiquettes produites par le sous-module 33; et une sortie reliée à une entrée du sous-module 33 pour lui signaler la détection d'un évènement significatif.

Le sous-module 31 formate, en mettant sous la forme d'un objet, chaque message appliqué à l'entrée 6 du système expert indiquant : un défaut dans une liaison ou un centre de commutation; un changement d'état, c'est-à-dire la mise en service ou la mise hors service d'un élément du réseau; ou des résultats transmis par un logiciel de maintenance locale exécuté, par exemple, à l'initiative du système expert pour localiser une panne. Les messages formatés sont transmis à la base de données 22, via la sortie 1, et au sous-module 33. Chaque message est inscrit dans la base de données 22 à l'intérieur d'un espace associé à un registre appelé compteur. Chaque registre compteur stocke une valeur de comptage, qui est le nombre de messages d'un certain type, ou de certains types, reçus pendant un intervalle de temps glissant. Cette valeur est incrémentée par le sous-module 32 de gestion de comptage. Elle est comparée à une valeur de seuil prédéterminée. Si la valeur de seuil est atteinte, l'ensemble des messages stockés dans cet espace est lu par le sous-module 32; puis est effacé de cet espace; puis est réinscrit dans un autre emplacement de la base de données 22. Cet autre emplacement n'est pas associé à un registre de comptage mais à un registre d'étiquette. Une étiquette de problème est inscrite dans ce registre et indique que l'ensemble des messages stockés dans cet autre emplacement constitue un évènement significatif qui est une manifestation du problème désigné par cette étiquette. Le registre compteur est remis à zéro par le sous-module 32.

Chaque évènement significatif est détecté au moyen d'un compteur et d'un comparateur pour faire un comptage des messages reçus par ce compteur pendant un intervalle glissant ayant une durée prédéterminée. Le type de messages à compter, la durée de l'intervalle de temps glissant, et la valeur de seuil sont choisis par le module de raisonnement 23 en fonction de règles prédéterminées par un expert humain. Une pluralité de compteurs sont utilisés en parallèle pour détecter différents évènements significatifs correspondant à différents problèmes, ou correspondant à une absence de problème, car le système expert est utilisé aussi pour vérifier qu'une réparation a effectivement rétabli un fonctionnement normal du réseau de télécommunications. Ces paramètres sont fournis à l'entrée 4 du module 32 par le module de raisonnement 23. Le module 32 gère les compteurs du module 33 en fonction de ces paramètres. Les évènements significatifs les plus intéressants ne sont pas les mêmes selon le problème visé. Par conséquent, le module de raisonnement 23 sélectionne certains types de message, et pas d'autres, en fonction des évènements significatifs qui sont intéressants pour les traitements en cours à l'instant considéré.

Chaque fois qu'un évènement significatif nouveau permet au module 32 de conclure qu'un problème potentiel nouveau est détecté, il commande le module 33 pour produire une nouvelle valeur d'étiquette qui est attribuée à ce problème, et qui est associée à tous les messages constitutifs de ce nouvel évènement significatif, par le procédé de lecture-réécriture mentionné ci-dessus.

La sortie 5 du module 21 fournit à l'interface graphique 25 : tous les évènements significatifs, les changements d'états, les résultats d'exécution de logiciels de maintenance locale, les valeurs de comptage, et les valeurs de seuil. Ces informations sont utiles aux experts humains même quand le réseau a un fonctionnement "normal" car elles indiquent le degré exact de bon fonctionnement du réseau de télécommunications.

Chaque évènement significatif et l'étiquette du problème correspondant sont fournis par le sous-module 33 à la sortie 3.

Des messages d'entrée particuliers sont reçus lorsque l'état du réseau de télécommunications change et lorsque le réseau de maintenance fournit au système expert des résultats de l'exécution d'un programme de recherche de panne, ayant été lancé à la demande du système expert. Ces messages particuliers sont stockés eux aussi dans la base de données 22, une étiquette particulière leur est associée, et un évènement significatif est produit par le module 33, puis est transmis au module de raisonnement 23, pour analyse.

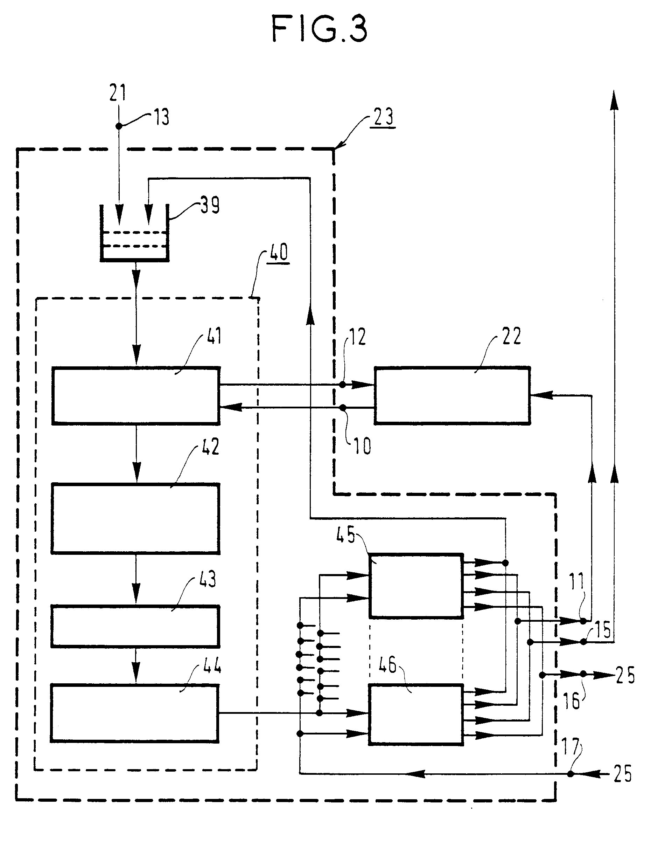

La figure 3 représente schématiquement l'architecture du module de raisonnement 23, dans cet exemple de réalisation. Il comprend :
- une mémoire 39 du type "premier entré-premier sorti";
- un module logiciel 40, appelé module de commande;
- une pluralité de modules logiciels appelés spécialistes, 45, ..., 46.

La mémoire 39 possède : une première entrée de données constituant l'entrée 13 du module 23, qui est reliée au module de filtrage 21 pour recevoir les évènements significatifs respectivement associés à leurs étiquettes; une seconde entrée de données recevant des messages envoyés par les spécialistes 45,...,46; et une sortie de données reliée à une entrée du module de commande 40.

Tous les spécialistes 45, ..., 46 possèdent une entrée commune reliée à une première sortie du module de commande 40 et une autre entrée commune reliée à l'entrée 17 du module 23, qui est reliée à l'interface graphique 25. Tous les spécialistes possèdent en outre : une sortie reliée à la sortie 11 du module 23, qui est reliée à une entrée de la base de données 22; une sortie reliée à la sortie 15 du module 23, qui est reliée au réseau de maintenance du réseau de télécommunications; une sortie reliée à la sortie 16 du module 23, qui est reliée à une entrée de l'interface graphique 25; et une sortie reliée à la seconde entrée de données de la mémoire 39.

Il y a deux sortes de spécialistes : les spécialistes de domaines et les spécialistes de gestion.Les connaissances d'experts humains sont réparties dans les spécialistes de domaines de telle manière que chaque spécialiste a un rôle limité au traitement d'une partie seulement du problème détecté par l'apparition d'un évènement significatif. Plusieurs spécialistes sont nécessaires simultanément pour traiter les diverses parties, appelées sous-problèmes, constituant chaque problème. Les spécialistes raisonnent pour localiser une panne dans le réseau en propageant leur raisonnement dans un modèle du réseau de télécommunications mémorisé dans la base de données 22, et ayant la forme d'un arbre. Ce modèle sera décrit plus loin. Les spécialistes sont des logiciels écrits en langage orienté objets et de telle manière qu'ils puissent être exécutés en parallèle sans possibilité d'interblocage.

Une collaboration entre plusieurs spécialistes peut être nécessaire pour traiter un sous-problème, mais les spécialistes ne s'appellent pas l'un l'autre directement. Le module 40 décide quels sont les spécialistes exécutés et dans quel ordre.

Chaque spécialiste comporte deux parties : une partie appellée précondition, et une partie appellée action. La partie précondition décrit la situation dans laquelle ce spécialiste peut être exécuté. La partie action propose généralement une action de maintenance telle que mettre hors service un élément défectueux du réseau de télécommunications ou remplacer un élément interchangeable. Une telle action provoque des résultats sous la forme de messages changement d'état envoyés au système expert par le réseau de télécommunications, via le réseau de maintenance. Les spécialistes mémorisent le résultat de ce traitement sous la forme d'un objet dans la base de données 22, en transférant ce résultat par la sortie 11 du module 23. Lorsque le résultat du traitement consiste à proposer une commande pour mettre hors service un élément défectueux du réseau ou à proposer de remplacer un élément interchangeable, ce résultat est aussi transféré à l'interface graphique 25 par la sortie 16 du module 23, afin d'informer un expert humain ou le personnel de réparation.

Il y a trois spécialistes de gestion :
- un spécialiste des problèmes nouveaux, qui crée un objet nouveau correspondant à un problème nouveau.
- un spécialiste des changements d'états et des résultats de programme de localisations de panne, qui met à jour les données de traitement d'un problème, en fonction des changements d'états du réseau de télécommunications, et des résultats fournis par des logiciels de maintenance locale lancés par le système expert pour localiser des pannes.
- un spécialiste des fins de problèmes, qui a pour fonction d'archiver sous la forme d'un objet, dans la base de données 22, les données de traitement d'un problème, lorsque le traitement de ce problème arrive à sa fin, que le problème soit résolu ou non.

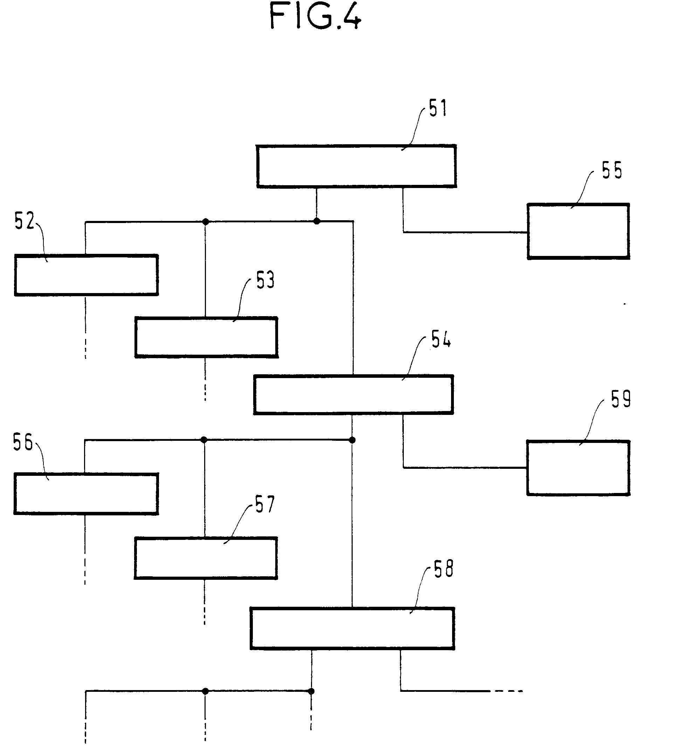

La figure 4 représente schématiquement le modèle d'un exemple de centre de commutation 51 du réseau de télécommunications, permettant de localiser une panne qui est la cause d'un problème dans ce réseau. Ce modèle a, de préférence, une forme d'arbre. Le centre de commutation 51 est décomposé par exemple en trois sous-systèmes 52, 53, 54 et un matériel spécifique 55. Le matériel spécifique 55 diffère des sous-systèmes 53 à 54 par fait qu'il ne peut pas être décomposé en parties plus petites pour affiner la localisation d'une panne.

Lorsqu'une panne ne peut pas être imputée à l'un des sous-systèmes 52, 53, 54, le module de commande 40 conclut que la panne est imputable au matériel spécifique 55. Chacun des sous-systèmes 52, 53, 54 est lui-même décomposé en plusieurs sous-sous-systèmes, et un matériel spécifique. Par exemple, le sous-système 54 est décomposé en trois sous-sous-systèmes 56, 57, 58, et un matériel spécifique 59. Lorsqu'une panne est imputable au sous-système 54, le module de commande 32 recherche, au moyen des spécialistes correspondants, quel sous-sous-système 56 à 58 peut avoir une panne correspondant aux évènements significatifs. Si les spécialistes concluent que la cause la panne n'est située dans aucun des sous-sous-systèmes 56 à 58, le module de commande 40 conclut que la cause de la panne est située dans le matériel spécifique 59, et il ne peut pas pousser plus loin l'analyse. Chacun des sous-sous-systèmes 56 à 58 est lui-même décomposé en d'autres éléments plus petits, ce qui permet d'affiner la localisation d'une panne par le système expert.

Considérons sur la figure 3 l'architecture du module de commande 40. Le module de commande 40 a pour fonction : de corréler entre eux des évènements significatifs et de les associer aux problèmes déjà en cours d'analyse; de déterminer quel spécialiste est susceptible de résoudre un sous-problème; et de lancer l'exécution de ces spécialistes en limitant leur durée d'exécution. Le module 40 comporte : un corrélateur 41; un gestionnaire d'agenda 42; un agenda 43; et un programmateur 44. Le corrélateur 41 possède : une entrée constitue la première entrée du module de commande 32, une sortie reliée une entrée du gestionnaire d'agenda 42, et une sortie constituant la sortie 12 du module de raisonnement 23 qui est reliée à une entrée de la base de données 22. Le gestionnaire d'agenda 42 possède : une entrée qui est reliée à une sortie du corrélateur 41; et une sortie reliée à une entrée de l'agenda 43. Une sortie de l'agenda 43 est reliée à une entrée du programmateur 44. Une sortie du programmateur 44 constitue la sortie du module 32 qui est reliée à une entrée commune à tous les spécialistes 45,...,46.

Le corrélateur 41 a pour fonction de corréler entre eux des évènements significatifs que lui fournit successivement la mémoire 39. Il lie ainsi entre eux des évènements qui sont causés par une même panne matérielle, car le but final est de détecter et de réparer une panne matérielle. Une seule panne matérielle peut se traduire par plusieurs types de message de maintenance arrivant simultanément. Le module de filtrage 21 détecte plusieurs évènements significatifs et crée alors différentes étiquettes de problème. Le corrélateur 41 doit donc détecter si les différents problèmes détectés ont une même cause ou pas. Pour cela, il applique des règles heuristiques prédéterminées qui ont été fournies par des experts humains. Le corrélateur 41 ne conserve qu'une seule étiquette pour tous les évènements qui sont liés entre eux.

Le corrélateur 41 lit dans la base de données 22 toutes les données associés aux étiquettes qui en fait, concernent la même panne. Le corrélateur leur associe une unique étiquette de problème. Les autres étiquettes précédemment attribuées à ces données sont libérées. Le corrélateur 41 fournit à la sortie 12 ces informations de traitement, avec leur nouvelle étiquette, pour les mémoriser dans la base de données 22, en remplacement de ces mêmes informations associées aux étiquettes précédemment attribuées par le module 21.

Le gestionnaire d'agenda 42 a pour fonction de rechercher, parmi les spécialistes 45,...,46, un ou plusieurs spécialistes susceptibles de traiter les problèmes détectés par le module 21 et liés par le corrélateur 41. Dans ce but, une liste de spécialistes qui sont candidats potentiels, prédéterminée par un expert humain, est associée à chaque type de message significatif. Chaque évènement significatif lance l'exécution de la partie appelée précondition, de chaque spécialiste de la liste associée à cet évènement significatif. Si l'exécution de la précondition d'un spécialiste montre qu'il est effectivement activable par un évènement significatif, ce spécialiste est inscrit dans l'agenda comme étant effectivement activable. Le programmateur 44 a pour fonction de sélectionner successivement dans l'agenda 43 les spécialistes qui sont activables, puis de lancer leur exécution. Les spécialistes activables pour des problèmes différents peuvent toujours être lancés indépendemment, alors que des spécialistes activables pour un même problème sont lancés dans un ordre déterminé. En particulier, les spécialistes de gestion sont toujours lancés avant les spécialistes de domaines.

Les spécialistes 45,..,46 fonctionnent sans possibilité d'inter-blocage car l'implémentation du module de raisonnement 23 est du type multiprocessus, comportant un module de filtrage 21 implémenté dans un processus, et un module de commande 40 implémenté dans un autre. Chaque spécialiste 45...,46 est implémenté par un processus séparé qui est créé et détruit par le module de commande 40 au fur et à mesure de la progression de l'analyse des problèmes. Les processus communiquent entre eux par l'intermédiaire de la base de données 22 qu'ils partagent, et par l'intermédiaire de la mémoire 39 qui constitue une queue, du type "premier-entré premier-sorti" pour tous les messages destinés au module de commande 32 : les messages significatifs provenant du module de filtrage 21 et les messages provenant des spécialistes 45,..., 46.

Le programmateur 44 garantit qu'aucun des processus ne monopolise le processeur sur lequel est implémenté le système expert. Au bout d'un délai prédéterminé, le programmateur 44 recueille les résultats du raisonnement de chaque spécialiste, s'il y a des résultats. Il arrête le traitement même si certains spécialistes pourraient continuer leur traitement encore longtemps. L'ordre de traitement des problèmes, choisi par le programmateur 44, n'est pas nécessairement l'ordre dans lequel les problèmes ont été détectés et étiquetés par le module 21. Les problèmes ne sont donc pas résolus forcément dans l'ordre où ils sont apparus dans le réseau de télécommunications. Le programmateur 44 n'attribue pas de priorité différente aux différents processus.

En cas de forte surchage du systèmes expert, c'est-à-dire si beaucoup de problèmes sont en cours de résolution en parallèle, le processus correspondant au module de filtrage 21 n'arrive pas à traiter tous les messages de maintenance envoyés par le réseau de maintenance du réseau de télécommunications. Un contrôle de flux, implémenté entre le réseau de maintenance et le réseau de télécommunications, peut assurer que les messages de maintenance ne soient pas perdus. Ces messages sont alors stockés dans une mémoire-tampon, dans le réseau de maintenance. Ils sont analysés une fois que la surchage a disparu. En principe, ces cas de surcharge sont rares, parce que la maintenance préventive permise par le système expert limite le nombre de problèmes apparaissant simultanément, et parce que l'architecture multiprocessus assure que les messages de maintenance sont traités aussitôt que possible après leur émission et que le système expert n'est pas paralysé lors de l'analyse d'un problème particulièrement complexe. La base de données 22 est orientée objets, et les données sont classées par problème, l'étiquette de problème étant utilisée comme clé d'accès. Cette classification des données permet de les retrouver rapidement et contribue ainsi à permettre un fonctionnement en temps réel du système expert.

La base de données 22 est gérée par un système de gestion de base de données, orienté objets. Elle contient, sous la forme d'objets, les données suivantes :
- tous les messages d'entrée reçus par le système expert;
- tous les évènements significatifs, c'est-à-dire les messages constitutifs et une étiquette de problème;
- les valeurs de comptage;
- les états successifs du réseau de télécommunications, en détaillant précisément les états de chaque élément matériel de ce réseau;
- des données de raisonnement utilisées par les spécialistes 45,...,46 du module 23, notamment le modèle du réseau, en forme d'arbre;
- des données de traitement de problèmes produites par le module 23 à la fin du traitement de chaque problème.

Les messages de maintenance sont répartis en classes, ces classes étant ordonnées selon une hiérarchie. La classe placée au sommet de cette hiérarchie possède toutes les caractéristiques communes à tous les messages de maintenance. Les autres classes en sont déduites par des ajouts successifs de caractéristiques. Lors de sa réception, chaque message de maintenance est mémorisé dans la base de données comme une instanciation d'un objet de chaque classe.

Les données de traitement d'un problème comprennent toutes les informations accumulées durant l'analyse de ce problème. A chaque instant, il y a d'autant d'objets de données de traitement de problème que d'analyses de problème en cours dans le système expert. Lorsque le traitement d'un problème est achevé, l'objet correspondant est archivé dans l'a base de données 22 pour y être disponible si un expert humain souhaite faire lui-même une analyse plus développée de ce problème. Chacun de ces objets de données de traitement d'un problème est identifié par l'étiquette propre à ce problème. Chacun de ces objets constitue la racine d'un arbre représentant des liens logiques entre toutes les informations relatives à un même problème.

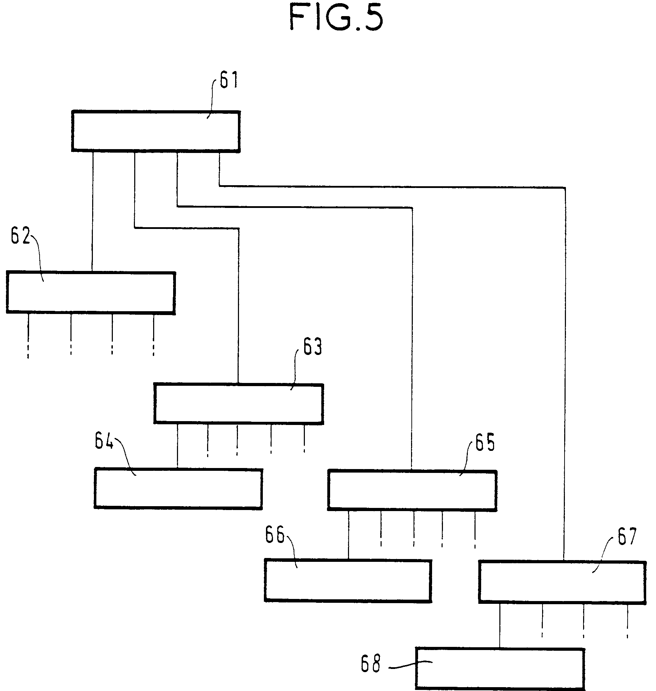

La figure 5 représente schématiquement cet arbre des données de traitement d'un problème donné, référencé 61. Ces informations relatives au problème 61 comprennent :
- un ensemble 62 de messages ayant été identifiés comme étant des évènements significatifs relatifs à ce problème 61, par le module de filtrage 21;
- un ensemble 63 d'actions 64 décidé par le module de commande 40, consistant généralement à lancer des logiciels de maintenance locale pour détecter et localiser des pannes dans un centre de commutation;
- un ensemble 65 de résultats 66 fournis par les spécialistes 45,..., 46;
- un ensemble 67 d'actions de communications homme-machine 68, constitué de messages de dialogues entre le système expert et un expert humain ou du personnel de réparation.

L'interface graphique 25 permet à un opérateur humain, expert en maintenance ou simple personnel de réparations, de surveiller en permanence le comportement du réseau de télécommunications et éventuellement de faire des diagnostics. Il peut afficher notamment l'arbre de raisonnement : chaque problème en cours d'analyse est identifié par son étiquette et est représenté comme un noeud de l'arbre. Chaque noeud est relié dynamiquement à des sous-noeuds représentant des informations associées avec le problème considéré. Comme de nombreux problèmes peuvent être analysés simultanément, il est possible d'afficher simultanément sur l'écran plusieurs noeuds et les sous-noeuds associés. L'interface graphique 25 permet aussi à l'expert humain de parcourir toutes les autres données de la base de données, en particulier celles fournies, sous la forme d'un bilan, par le module 24 de présentation de bilan. Lorsque le traitement d'un problème est terminé, cet arbre qui lie toutes les données de traitement du problème est archivé même si aucune solution n'a pu être trouvée pour ce problème.

La capacité de stockage de la mémoire de la base de données 22 étant limitée, il y a un risque de saturation. Pour éviter une saturation, un logiciel, non représenté sur les figures, est exécutée périodiquement pour effacer de la base de données 22 des messages de maintenance et d'autres données archivées. Les données à conserver sont choisies en fonction de leur importance pour un expert humain qui interrogerait éventuellement la base de données en vue de faire une analyse plus détaillée de certains problèmes non résolus.

Dans cet exemple de réalisation, la base de données 22, orienté objets, est un logiciel disponible dans le commerce sous la marque ONTOS commercialisée par ONTOS CORPORATION. L'interface graphique 25 est écrite au moyen d'un système commercialisé sous la marque X WINDOW par le MIT (Massachusetts Institute of Technology). Les commandes d'opérateur et les rapports sont implémentés en utilisant le logiciel commercialisé sous la marque MOTIF, par la OPEN SOFTWARE FOUNDATION.

Ce système expert peut être installé, par exemple, sur une machine SUN 4/40 SPARCSTATION, comportant 24 méga-octets de mémoire, et utilisant le système d'exploitation commercialisé sous la marque UNIX, par la société ATT.

Le module de commande 40, les messages d'entrée, le module de filtrage 21, le module 24 de présentation de bilan, les règles heuristiques, les spécialistes 45,...46, et le modèle du réseau, sont écrits en utilisant un langage orienté objets, commercialisé sous la marque C++ par la société ATT. L'écriture de ces logiciels est à la portée de l'homme de l'art, à partir de la description fonctionnelle donnée ci-dessus.

Le système expert selon l'invention peut être appliqué à tout réseau de télécommunications comportant un réseau de maintenance : à réseau de télécommunications classique, ou bien réseau du type "réseau intelligent", c'est-à-dire dans lequel les fonctions de commande de services sont centralisées dans des machines spécialisées, distinctes des machines de commutation, de façon à faciliter la modification des fonctions de commande, notamment pour procurer de nouveaux services.

## Revendications

**1)** Système expert supportant les contraintes du temps réel, pour résoudre un problème à partir d'un flux de messages d'entrée concernant le fonctionnement et les états d'un réseau de machines, ces états évoluant au cours du temps; caractérisé en ce qu'il comporte :
- un premier module (21) dit de filtrage, détectant en temps réel des évènements dits significatifs, à partir des messages d'entrée, chaque évènement significatif étant une manifestation d'un problème, d'après les connaissances d'un expert humain;
- une base de données (22) mémorisant : tous les messages d'entrée, les évènements significatifs définis par le premier module, des données dites intermédiaires produites par le système expert, des données constituant un modèle du réseau de machines, et des archives relatives à des problèmes traités antérieurement, résolus ou non;
- un deuxième module (23), dit de raisonnement, comprenant :
-- un ensemble de règles divisé en plusieurs sous-ensembles (45,..,46) appellés spécialistes, chacun étant constitué de connaissances fournies par un expert humain, nécessaires pour traiter une partie d'un problème, chaque spécialiste pouvant être exécuté en parallèle avec-d'autres sans inter-blocage;
-- des moyens de commande (40) pour sélectionner et exécuter des spécialistes (45,...,46) en fonction de règles heuristiques fournies par un expert humains, et pour prendre une décision ou déclarer une impossibilité de décision, à la fin d'un délai prédéterminé, sur au moins un problème traduit par des évènements significatifs que le module de filtrage (21) communique au module de raisonnement (23);
- une interface graphique (25) pour la communication entre le système expert et des hommes;
- un troisième module (24) dit de présentation de bilan pour fournir à un expert humain des données mémorisées dans la base de données.

**2)** Système expert selon la revendication 1, caractérisé en ce que le module de filtrage (2) comporte des moyens logiciels pour :
- distinguer différents types de message d'entrée;
- compter pendant un intervalle de temps glissant et ayant une durée fixée, des messages de différents types prédéterminés;
- détecter un évènement significatif chaque fois qu'un nombre des messages comptés dépasse un seuil fixé.

**3)** Système expert selon la revendication 1, caractérisé en ce que :
- les messages d'entrée, le module de présentation de bilan (24), le module de filtrage (21), les moyens de commande (40), les spécialistes (45,...,46), les règles heuristiques, et le modèle du réseau sont écrits dans un langage orienté objets;
- la base de données est orientée objets.

**4)** Système expert selon l'une quelconque des revendications 1 à 3, caractérisé en ce que les données mémorisées dans la base de données ont pour clé d'accès une étiquette désignant un problème.
